# NEUE EUROPÄISCHE PATENTSCHRIFT

(11) **EP 1 760 558 B2**
(45) Veröffentlichungstag und Bekanntmachung des Hinweises auf die Entscheidung über den Einspruch: **23.08.2017**
(45) Hinweis auf die Patenterteilung: 16.07.2014
(21) Anmeldenummer: 06017153.5
(22) Anmeldetag: 17.08.2006
(51) Int. Cl.: G05B 23/02

(54) **Vorrichtung und Verfahren zur Untersuchung der Sicherheit einer technischen Einrichtung**
System and method for assessing the safety of a technical system
Dispositif et procédé destinés à examiner la sécurité d'un dispositif technique

(30) Priorität: 29.08.2005 DE 102005040977
(43) Veröffentlichungstag der Anmeldung: 07.03.2007
(73) Patentinhaber: Deutsches Zentrum für Luft- und Raumfahrt e.V., 51147 Köln (DE)
(72) Erfinder: Hartwig, Katrin, 38106 Braunschweig (DE); Meyer zu Hörste, Michael, 38116 Braunschweig (DE); Grimm, Matthias, 38126 Braunschweig (DE)
(74) Vertreter: Gerstein, Hans Joachim

## Beschreibung

Die Erfindung betrifft ein Verfahren zur Untersuchung der Sicherheit einer technischen Einrichtung mit einer Vielzahl von Funktionseinheiten die miteinander durch Übertragung von Informationen vernetzt sind und eingehende Informationen mit mindestens einer für die Funktionseinheit spezifischen Funktion weiterverarbeiten.

Die Erfindung betrifft weiterhin eine Einrichtung zur Untersuchung der Sicherheit einer technischen Einrichtung, die eine Vielzahl von miteinander durch Übertragung von Informationen vernetzten Funktionseinheiten zur Verarbeitung von eingehenden Informationen mit mindestens einer für die Funktionseinheit spezifische Funktion hat. Die Untersuchungseinrichtung hat eine Bewertungseinheit und einen Datenspeicher.

Moderne komplexe technische Einrichtungen, wie verfahrenstechnische Anlagen, Kraftfahrzeuge, programmierbare Steuerungen, informationstechnische Anlagen und -Systeme weisen durch das Zusammenspiel miteinander vernetzter Funktionseinheiten ein nicht unerhebliches Risikopotenzial auf. Bei der Konstruktion und im Betrieb solcher technischen Einrichtungen ist es daher notwendig, das potenzielle Risiko für Personen, Umwelt und Sachwerte bei Ausfällen und Fehlfunktionen anhand einer technischen Risikoanalyse zu bewerten. In Abhängigkeit vom resultierenden Risiko sind dann Maßnahmen zur Risikoreduzierung durch Fehlervermeidung, Fehlererkennung und Fehlerbeherrschung abzuleiten. Damit soll sichergestellt werden, dass Anlagen und Maschinen sicher betrieben werden können.

In dem internationalen Standard IEC 61508 sind allgemeine Vorgaben für die Vermeidung und Beherrschung von Ausfällen, in elektrischen, elektronischen oder programmierbaren elektronischen Geräten enthalten. Die Norm gibt organisatorische und technische Anforderungen sowohl für die Geräteentwicklung als auch für den Gerätebetrieb vor. Für Anlagen und Risiko reduzierende Maßnahmen sind vier Sicherheitsstufen Safety Integrity Level - SIL mit SIL 1 für ein geringes Risiko bis SIL 4 für sehr hohes Risiko definiert. Je höher das Risiko bzw. der Sicherheitsintegritätslevel SIL ist, umso zuverlässiger müssen die Maßnahmen zur Risikoreduzierung durchgeführt werden. Im gleichen Maße steigen die Anforderungen an die in der technischen Einrichtung verwendeten Systemkomponenten.

Zur Beurteilung der funktionalen Sicherheit als Teil der Gesamtanlagensicherheit, der von der korrekten Funktion sicherheitsbezogener Systeme zur Risikoreduzierung abhängt, sind auf Nachweise gestützte Untersuchungen vorgeschrieben, die sicherstellen, dass die funktionale Sicherheit erreicht wurde. Bei einem funktional sicheren System müssen die Funktionseinheiten ihre bestimmungsgemäßen Funktionen unter definierten Fehlerbedingungen und mit definierter hoher Wahrscheinlichkeit ausführen.

Zur Unterscheidung unterschiedlicher Typen von Sicherheitsfunktionen sind Betriebsarten, beispielsweise mit niedriger Anforderungsrate und hoher oder kontinuierlicher Anforderungsrate definiert. Mit Hilfe der Betriebsarten werden Ausfallgrenzwerte einer Sicherheitsfunktion zum Safety Integrity Level SIL in Bezug gesetzt.

Sicherheitsuntersuchungen auf Basis der Norm IEC 61508 sind insbesondere in den folgenden Bereichen anwendbar:
Notabschalt-Systeme, Feuermelde- und Gaswarnsysteme, Turbinenüberwachung, Brennersteuerungen, automatische Überlastanzeigen für Kräne, Sicherheitsverriegelungen und Notabschaltsysteme für Maschinen, medizinische Geräte, Überwachung von Schiffsbewegungen in der Nähe von Hafen- oder Offshore-Anlagen, elektronische Ansteuerung von Flugzeugleitwerken (Fly by Wire), Bahnsignalsysteme, Beeinflussungssysteme in Kraftfahrzeugen, Antiblockiersysteme, Motormanagementsysteme, Bremssysteme, netzwerkbasierte Fernüberwachung etc.

Ein System und ein Verfahren zur kontinuierlichen Online-Sicherheitsüberwachung unter Zuhilfenahme von Sicherheitsintegritätsleveln SIL ist in der WO 2005/013098 A2 beschrieben. Dabei werden Betriebsinformationen von Funktionseinheiten zentral ausgewertet, um die Fehlerwahrscheinlichkeit zu bestimmen.

Bei den bisher angewandten Methoden zur Sicherheitsuntersuchung werden Detailsysteme eines untersuchenden Systems einzeln betrachtet. Dabei werden Aktionen, die von den Betrachtern im Teilsystem durchgeführt werden, und die von dem Teilsystem für andere Teilsysteme bereitgestellten Informationen betrachtet und auf Ihre Sicherheitsrelevanz hin untersucht. Bei der Untersuchung werden auch Personen wie ein eine Information empfangendes Teilsystem behandelt.

Für jede ausgehenden Information wird untersucht, welche Konsequenzen in der weiteren Verarbeitung dieser Information ein Fehler in der Erzeugung oder Übertragung an andere Teilsysteme hervorrufen kann und ob diese zu einer Gefährdung von Personen führen können. Das betrachte Teilsystem wird nur dann als nicht sicherheitsrelevant eingestuft, wenn weder eine Aktion des Teilsystems noch eine der vom Teilsystem bereitgestellten Informationen als sicherheitsrelevant eingeschätzt werden. Hierzu ist es erforderlich, dass bei Betrachtung eines Teilsystems auch die Teilsysteme analysiert werden, die die bereitgestellten Informationen verarbeiten. Des Weiteren wird für jedes Teilsystem betrachtet, welche Störungen eine falsche eingehende Information hervorrufen kann.

In Matthias Grimm, Michael Meyer zu Hörste, Stephanie Schwartz, Karsten Lämmer: Methodischer Ansatz für die Sicherheitsbetrachtung von Eisenbahnsystemen am Beispiel eines Bahnübergangs, in: Zilina (SK), 24.-25.05.2005 Zel. 2005, 12. Int. Symposium ist ein Verfahren zur Identifikation sicherheitsrelevanter Funktionen und Teilsysteme beschrieben, das beispielsweise bei dem Entwurf und dem Betrieb von Eisenbahnanlagen eingesetzt werden kann. Bei dem Verfahren wird das Gesamtsystem in Teilsysteme zerlegt, die funktionale Einheiten für das Gesamtsystem bilden. Dabei wird die Kommunikation der Teilsysteme untereinander sowie die nach außen sichtbaren Aktionen untersucht. Anschließend werden die Sicherheitsanforderungen an die Teilsysteme bewertet und eine Analyse der sicherheitsrelevanten Teilsysteme durchgeführt. Nach einer Analyse der Sicherheit von den softwareausgeführten Teilsystemen erfolgt eine Klassifizierung des Sicherheitsniveaus.

Die Sicherheitsuntersuchung für eine komplexe technische Einrichtung mit den bekannten Verfahren ist sehr aufwändig und zeitintensiv. Zudem ist eine Fehlerkontrolle sehr schwierig, wodurch sich leicht nicht erkennbare Inkonsistenzen in der Gesamtbetrachtung ergeben können. Zudem werden einzelne Informationen mehrfach analysiert, da sowohl die eingehenden, als auch die von den Funktionseinheiten bereitgestellten Informationen untersucht werden. Dabei kann es zu einer unterschiedlichen Einschätzung der Konsequenzen und Gefährdungen kommen.

Wird eine von einer betrachteten Funktionseinheit bereitgestellte Information von einer anderen Funktionseinheit zu einer weiteren Information verarbeitet und wiederum anderen Funktionseinheiten zur Verfügung gestellt, so ist die Verfolgung der Auswirkungen durch eine falsche Information nur möglich, indem alle Funktionseinheiten in der Informationskette von der Erzeugung der ursprünglichen Information bis zu der resultierenden Aktion oder nach außen abgegebenen Information betrachtet werden.

Aufgabe der vorliegenden Erfindung ist es daher, ein verbessertes Verfahren und eine verbesserte Einrichtung zur Untersuchung der Sicherheit einer technischen Einrichtung zu schaffen.

Die Aufgabe wird mit dem Verfahren der eingangs genannten Art gelöst durch
a) Überprüfen der Sicherheitsrelevanz der eingehenden Information und Abspeichern von Sicherheitsrelevanzdaten für jede eingehende Information in Bezug auf die diese eingehende Information erhaltende Funktionseinheit für jede Funktionseinheit der technischen Einrichtung; und
ausgehend von jeweils einer Funktionseinheit, die eine Information nicht weiterverarbeitet, um sie einer anderen Funktionseinheit als eingehende Information bereitzustellen,
b) Zuordnen der Sicherheitsrelevanzdaten der eingehenden Informationen auf die entsprechende ausgehende Information einer vorhergehenden Funktionseinheit, die die ausgehende Information der nachfolgenden Funktionseinheit als eingehende Information bereitstellt, und
c) Untersuchung der technischen Einrichtung hinsichtlich der Sicherheit in Abhängigkeit von den abgespeicherten Sicherheitsrelevanzdaten.

Durch die Untersuchung jeder Funktion der betrachteten Funktionseinheit separat voneinander und Betrachtung der eingehenden Information anstelle der von der Funktion bereitgestellten Informationen wird erreicht, dass die Funktionseinheiten als Teilsysteme unabhängig voneinander bewertet werden können. Dies kann automatisch in geeigneten CAD- oder Modellierungseinrichtungen erfolgen. Die Bewertung kann auch vom Hersteller einer Funktionseinheit bereitgestellt werden. Das Verfahren hat den Vorteil, dass die Sicherheitsrelevanz der ausgehenden Informationen nicht separat untersucht werden muss. Stattdessen wird nach Abspeicherung aller Sicherheitsrelevanzdaten für die einzelnen Funktionseinheiten die technische Einrichtung rekursiv untersucht, wobei einer ausgehenden Information die Sicherheitsrelevanzdaten der entsprechenden eingehenden Information einer nachfolgenden Funktionseinheit zugewiesen werden. Der Sicherheitsintegritätslevel bzw. die Sicherheitsanforderungsklasse einer ausgehenden Information wird damit nicht durch die spezifischen Funktionen der die ausgehende Information erzeugende Funktionseinheit oder durch die eingehenden Informationen dieser Funktionseinheit bestimmt, sondern durch die Sicherheitsanforderungen des nachfolgenden Teilsystems, welches die ausgehende Information erhält.

Besonders vorteilhaft ist es, wenn zunächst für die Funktionseinheiten:
a) eine Überprüfung erfolgt, ob mit den eingehenden Informationen Aktionen durch die spezifische Funktion ausgelöst werden und ob Auswirkungen solcher Aktionen sicherheitskritisch sind, und Speichern der Sicherheitsrelevanz der Auswirkungen von Aktionen in Bezug auf die eingehenden Informationen;
b) eine Überprüfung erfolgt, ob eingehende Informationen durch die Funktionseinheit zur Ausgabe von Warnungen genutzt werden, und Speichern der Sicherheitsrelevanz der eingehenden Informationen in Bezug auf die Funktionseinheit, wobei zur Ausgabe von Warnungen genutzte Informationen als sicherheitsrelevant eingestuft werden; und
c) eine Überprüfung erfolgt, welche eingehenden Informationen mit anderen eingehenden Informationen durch die spezifische Funktion zu einer neuen Information verarbeitet werden, und Speichern der Sicherheitsrelevanz der eingehenden Information in Bezug auf die ausgehende Information, soweit dies möglich ist, und der Identität der mindestens einen Funktionseinheit, die die neue Information als eingehende Information erhält.

Anschließend erfolgt für die technische Einrichtung ausgehend von einer Funktionseinheit, die eine Information nicht weiterverarbeitet, um sie einer anderen Funktionseinheit als eingehende Information bereitzustellen, ein Zuordnen von gespeicherten Sicherheitsrelevanzdaten der eingehenden Informationen zu den entsprechenden neuen Information der Funktionseinheiten, die die neue Information der nachfolgenden Funktionseinheit als eingehende Information bereitstellt. Hintergrund hierfür ist, dass die Sicherheitsrelevanz einer Information sich auf ihre Erzeugung überträgt, da nur so sichergestellt werden kann, dass die Information den an sie gestellten Sicherheitsanforderungen genügt. Dieses zweistufige Verfahren hat den Vorteil, dass es systematisch und automatisierbar ist. Dabei werden die von der betrachteten Funktion bereitgestellten optischen und akustischen Informationen für Personen sowie Aktionen, die von zu dieser Funktion gehörenden Aktionen durchgeführt werden sowohl auf ihre Sicherheitsrelevanz hin untersucht, als auch auf die diese Aktionen und Informationen auslösenden in diese Funktion eingehenden Informationen. Des Weiteren wird untersucht, welche Informationen für welche Funktionseinheiten als Teilsysteme aus einer eingehenden Information generiert werden.

Weiterhin ist es vorteilhaft, wenn Sicherheitsrelevanzdaten ausgehender Informationen und / oder Aktionen von Funktionseinheiten zu den spezifischen Funktionen derart zugeordnet werden, dass eine spezifische Funktion ebenfalls als sicherheitsrelevant eingestuft wird, wenn eine von der spezifischen Funktion generierte ausgehende Information oder Aktion sicherheitsrelevant ist. D. h., dass das von der spezifischen Funktion generierte Ergebnis selbst Kriterium für die Sicherheitsrelevanz der spezifischen Funktion ist.

Die Sicherheitsrelevanzdaten können beispielsweise definierte Sicherheitsintegritätslevel (Safety Integrity Level SIL) sein, wie sie in dem ISO-Standard 61508 definiert sind. Sicherheitsrelevanzdaten können aber auch Sicherheitsanforderungsklassen (AK) oder ähnliches sein.

Das Verfahren wird erfindungsgemäß automatisch in Abhängigkeit von einem abgespeicherten Systemmodul der technischen Einrichtung in einem Computer ausgeführt, so dass komplexe technische Systeme zuverlässig und wirtschaftlich überprüfbar sind.

Die Aufgabe wird weiterhin mit der Einrichtung der eingangs genannten Art, dadurch gelöst, dass eine Bewertungseinheit zur Durchführung des oben genannten Verfahrens beispielsweise durch geeignete Programmierung eines Computersystems mit Programmcodemitteln eingerichtet ist, wobei die Programmcodemittel die Schritte des Verfahrens durchführen, wenn das Computerprogramm auf einem Computer ausgeführt wird.

Die Bewertungseinheit ist dabei eingerichtet, um mindestens die folgenden Schritte durchzuführen:
a) Überprüfen der Sicherheitsrelevanz der eingehenden Information und Abspeichern von Sicherheitsrelevanzdaten für jede eingehende Information in Bezug auf die diese eingehende Information erhaltende Funktionseinheit; und
ausgehend von jeweils einer Funktionseinheit, die eine Information nicht weiterverarbeitet, um sie einer anderen Funktionseinheit als eingehende Information bereitzustellen,
b) Zuordnen der Sicherheitsrelevanzdaten der eingehenden Information auf die entsprechende ausgehende Information einer vorhergehenden Funktionseinheit, die die ausgehende Information der nachfolgenden Funktionseinheit als eingehende Information bereitstellt, und
c) Untersuchung der technischen Einrichtung hinsichtlich der Sicherheit in Abhängigkeit von den abgespeicherten Sicherheitsrelevanzdaten.

Die Erfindung wird nachfolgend anhand von Ausführungsbeispielen mit den beigefügten Zeichnungen näher erläutert. Es zeigen:
- Figur 1 -: Diagramm einer Fahrzeugleit- und Sicherheitseinrichtung insbesondere für Eisenbahnfahrzeuge;
- Figur 2 -: Flussdiagramm des Verfahrens zur Sicherheitsuntersuchung technischer Einrichtungen;

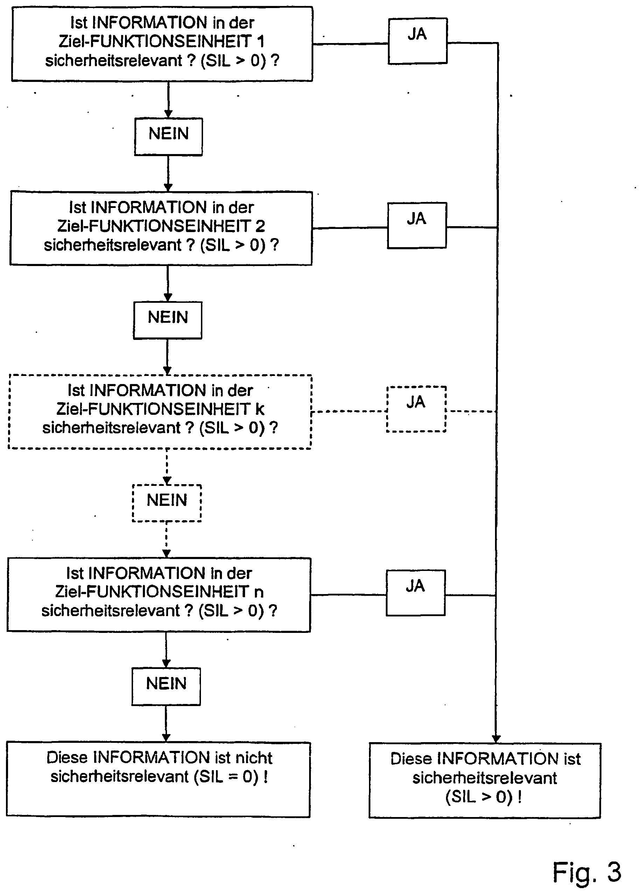

- Figur 3 -: Flussdiagramm der rekursiven Analyse der gespeicherten Sicherheitsrelevanzdaten;
- Figur 4 -: Skizze einer Steuereinheit für einen elektrischen Fensterheber mit Einklemmschutz;
- Figur 5 -: Logikdiagramm der Funktion "Heben" der Steuereinheit aus Figur 4;
- Figur 6 -: Logikdiagramm der Funktion "Senken" der Steuereinheit aus Figur 4.

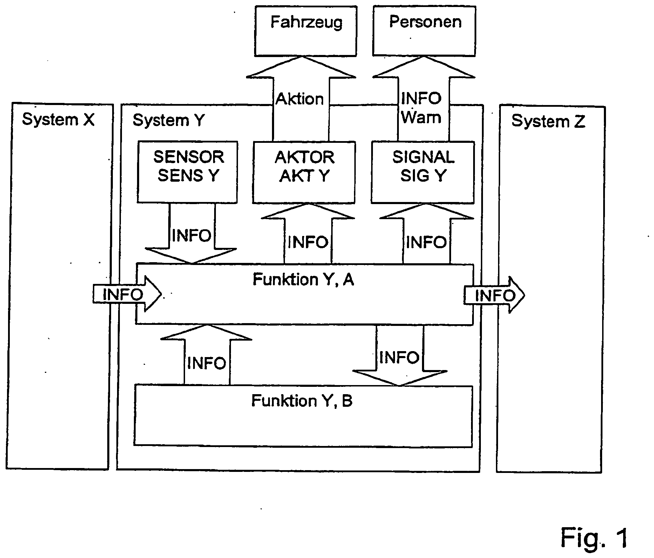

Die Figur 1 lässt ein Blockdiagramm einer technischen Einrichtung erkennen, die als Leit- und Sicherheitseinrichtung für den Eisenbahnverkehr genutzt wird.

Die technische Einrichtung besteht aus drei miteinander vernetzten Systemen X, Y und Z, wobei das System X Informationen an eine Funktionseinheit zur Ausführung einer spezifischen Funktion X, A weiterleitet. Das System Y hat eine weitere Funktionseinheit zur Ausführung der spezifischen Funktion Y, B, die Informationen an die Funktionseinheit mit der spezifischen Funktion Y, A übergibt und Informationen von der Funktionseinheit mit der spezifischen Funktion Y, A erhält.

Die spezifische Funktion Y, A der Funktionseinheit A leitet weiterhin Informationen an ein System Z sowie an Aktoren AKT Y und an optische und / oder akustische Signalgeber SIG Y weiter. Die Funktionseinheit erhält zudem Informationen von Sensoren SENS Y.

Die Aktoren AKT Y führen auf der Basis der von der Funktionseinheit A erhaltenen Informationen Aktionen aus, die sich auf die Eisenbahnfahrzeuge auswirken.

Die optischen und akustischen Signalgeber SIG Y geben Informationen und Warnungen basierend auf den von der Funktionseinheit A erhaltenen Informationen an Personen, insbesondere den Triebfahrzeugführer, Passagiere oder andere Verkehrsteilnehmer weiter.

Zur Untersuchung der Sicherheit der technischen Einrichtung wird jede Funktion daraufhin untersucht, ob sie sicherheitsrelevante Funktionen anstößt oder sicherheitsrelevante Informationen für Personen erzeugt. Es wird auch geprüft, welche eingehenden Informationen an andere Funktionen auch mit verarbeiteter Funktion, anderen Funktionen zur Verfügung gestellt werden. Diese Untersuchung kann automatisiert erfolgen, wenn die technische Einrichtung mit ihren Daten in einem CAD-System vorliegt.

Bei der Untersuchung wird davon ausgegangen, dass keine Funktion eine ausgehende Information erzeugen kann, ohne dass die Funktionseinheit Informationen erhält. Die spezifische Funktion jeder Funktionseinheit muss von einer Information angestoßen werden. Solche Informationen können auch Zeitsignale sein, wobei Zeitsignalgeber als Sensoren einzustufen sind. Gleiches gilt für Mensch-, Maschine-Schnittstellen, wie z. B. Taster und Schalter am Fahrerpult oder die Taster für einen Haltewunsch im Fahrgastraum.

Bei der Untersuchung der Sicherheit der technischen Einrichtung sind folgende mögliche Fehlerfälle zu überprüfen.
a) die eingehende Information ändert sich nicht, obwohl die Bedingungen in der die Information generierenden spezifischen Funktion (Ursprung der Information) gegeben sind,
b) die eingehende Information ändert sich, obwohl die Bedingungen in der die Information generierenden Funktionen (Ursprung der Information) nicht gegeben sind,
c) die eingehende Information ist zur sicheren Seite hin falsch,
d) die eingehende Information ist zu der unsicheren Seite hin falsch.

Die bei der Analyse gewonnenen Erkenntnisse, warum eine Aktion oder Information über Signalgeber sicherheitsrelevant sind oder nicht, werden abgespeichert.

Wenn sich herausstellt, dass eine betrachte Funktion sicherheitsrelevant ist, wird geprüft, wie den Auswirkungen eines Fehlers in der Funktion begegnet wird. Dies können z. B. Anweisungen für den Triebfahrzeugführer in der Betriebsanweisung oder besondere Wartungsintervalle für das betroffene System.

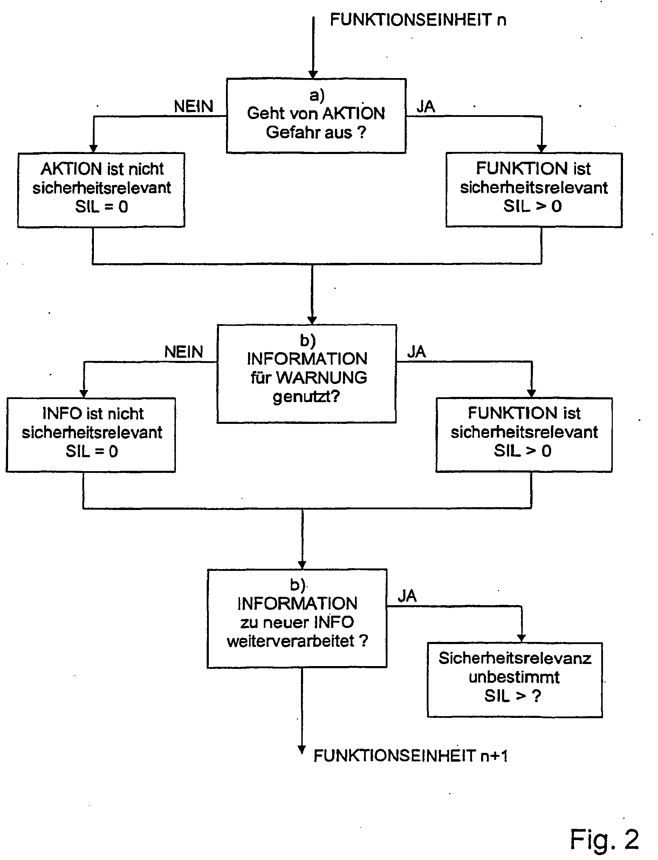

Die Figur 2 lässt ein Flussdiagramm der Schritte bei der Überprüfung der Sicherheitsrelevanz der eingehenden Informationen der einzelnen Funktionseinheiten und Abspeicherung der Sicherheitsrelevanzdaten für jede eingehende Information in Bezug auf die Funktionseinheit, welche die eingehende Information erhält, erkennen.

In einem Schritt a) wird überprüft, ob mit den eingehenden Informationen Aktionen durch die spezifischen Funktionen ausgelöst werden und ob Auswirkungen solcher Aktionen sicherheitskritisch sind. Wenn von Aktionen eine Gefahr beispielsweise für Fahrzeuge und Personen ausgeht, ist die Funktion selbst sicherheitsrelevant und wird als solche gekennzeichnet (SIL > 0) ansonsten sind die Aktionen dieser Funktionen nicht sicherheitsrelevant (SIL = 0).

Anschließend wird untersucht, welche eingehenden Informationen verarbeitet werden, um diese Aktion auszulösen (Information an Aktor), woraus sich ergibt, ob diese eingehende Information aufgrund der Aktion sicherheitsrelevant (SIL = 1 bis 4) ist.

In einem nächsten Schritt b) wird untersucht, ob eingehende Informationen durch die Funktionseinheit zur Ausgabe von Warnungen genutzt werden. In diesem Fall wird die Funktion als sicherheitsrelevant (SIL > 0) eingestuft. Warnungen werden also grundsätzlich als sicherheitsrelevant angesehen. Sonstige Informationen sind nicht sicherheitsrelevant.

In einem weiteren Schritt c) wird überprüft, welche eingehenden Informationen mit anderen eingehenden Information durch die spezifische Funktion der untersuchten Funktionseinheit zu einer neuen Information verarbeitet werden, um diese neue Funktion anderen Funktionen zur Verfügung zu stellen. Wird die eingehende Information zu einer Information verarbeitet, die anderen Funktionen zu Verfügung gestellt wird, so kann an dieser Stelle noch keine endgültige Aussage getroffen werden, ob diese Funktion wegen der ausgehenden Information sicherheitsrelevant ist.

Mit diesen drei Schritten a) bis c) entsteht für jede untersuchte Funktionseinheit und zugehörige spezifische Funktion eine Übersicht, was mit den eingehenden Informationen in der betrachteten Funktion geschieht:
a) sie wird benutzt, um eine Aktion auszulösen,
b) sie wird benutzt, um den Fahrzeugführer oder einen anderen Verkehrsteilnehmer zu informieren (SIL = 0), oder zu warnen (SIL > 0),
c) sie wird mit weiteren Informationen zu einer neuen Information verarbeitet, die anderen Funktionen zur Verfügung gestellt wird (SIL = ?).

Die nachfolgende Tabelle lässt eine übersichtliche Darstellung der abgespeicherten Sicherheitsrelevanzdaten an einem Beispiel erkennen.

| Betrachtete Funktion: Funktionsname | | | | | | |
|---|---|---|---|---|---|---|
| Eingehende Information | Aktion | Aktion SIL > 0 | Informieren / Warnen des TF / anderer Verkehrsteilnehmer | Info SIL > 0 | Verarbeitet zu Information für andere Funktion | |
| | | | | | Ausgehende Information | Zielfunktionen / System |
| Information von Funktion: Funktionsname | | | | | | |
| Inhalt von Information I | Auswirkung I | - | Inhalt der Information / Warnung | X | Inhalt von Information I | Funktionsname I |
| | Auswirkung II | X | Inhalt der Information / Warnung II | - | Inhalt von Information II | Funktionsname II |
| | | | | | | Funktionsname III |
| Inhalt von Information II | Auswirkung I | - | Inhalt der Information / Warnung I | - | - | - |

Da bei der Untersuchung der einzelnen Funktionen eines Systems die eine Information erhaltene Zielfunktion in einem anderen System vorerst nicht bekannt ist, wenn nur eines der miteinander vernetzten Systeme betrachtet wird, wird in die letzte Spalte der Tabelle zunächst die Ziel-Funktionseinheit eingetragen, die eine Information erhält. Nach Betrachtung aller Funktionseinheiten können die Tabellen der verschiedenen Funktionseinheiten miteinander abgeglichen und die Namen der Ziel-Funktionseinheiten nachgetragen werden.

Anschließend werden zum Abschluss der Sicherheitsuntersuchung die ein- und ausgehenden Informationen der benachbarten Funktionseinheiten (Funktionen die Informationen austauchen) verglichen, um endgültig festzustellen, welche Informationen sicherheitsrelevant sind. Dabei wird eine Information von der Funktionseinheit aus betrachtet, die diese Information nicht zu einer anderen Information verarbeitet.

Wenn die eingehende Information dieser letzten Funktionseinheit dort sicherheitsrelevant ist, so ist sie in der vorhergehenden Funktionseinheit ebenfalls sicherheitsrelevant, die die eingehende Information als ausgebende Information an die nachfolgende Funktionseinheit übergibt. Diese Betrachtung wird für alle Informationen jeder Funktionseinheit durchgeführt. Ist eine Information in keiner ihrer Ziel-Funktionseinheiten sicherheitsrelevant, so ist sie nicht sicherheitsrelevant.

Dieses Verfahren ist in der Figur 2 als Flussdiagramm skizziert.

Bei automatisierbaren Vergleich der Tabellen und Ergänzung der gespeicherten Sicherheitsrelevanzdaten erfolgt die Bearbeitung von rechts nach links in der Tabelle. Ein Kreuz in der Spalte "ausgehende Information - SIL > 0" führt zu einem Kreuz in der Spalte "eingehende Information - SIL > 0" in derselben Zeile. Alternativ kann auch anstelle eines Kreuzes bereits eine Bewertung des Sicherheitsintegritätslevels SIL = 1 bis 4 abgespeichert werden. Wenn zur Kontrolle bei jeder geprüften Information ein Kreuz oder eine Zahl für SIL > 0 oder ein Strich oder eine Zahl für SIL > 0 und ein Strich oder eine Null für SIL = 0 eingefügt wird, so lässt sich zum Schluss eine Vollständigkeitsprüfung durchführen. Wenn eine der ein- bzw. ausgehenden Information in der Spalte "eingehende Information SIL > 0" oder "ausgehende Information SIL > 0" keine Markierung hat, so ist zu überprüfen, in welcher dieser Funktionen diese Information nicht beachtet wurde.

Nach der Zuweisung der Sicherheitsintegritätslevel SIL zu den eingehenden Informationen ist zu prüfen, ob die ausgehende Information für die Zuweisung von Sicherheitsintegritätsleveln SIL der eingehenden Information maßgeblich war. Ist dies der Fall, so ist zu prüfen, ob die betrachtete eingehende Information in Bezug auf die ausgehende Information sicherheitsrelevant ist. Ist dies nicht der Fall, so kann der eingehenden Information der Sicherheitsintegritätslevel SIL zugewiesen werden, der sich aus einer anderen ausgehenden Funktion, einer Aktion oder Warnung ergibt. Andernfalls würde der eingehenden Information und damit auch der sie erzeugenden Funktionseinheit ein unnötig hoher Sicherheitsintegritätslevel SIL zugewiesen werden.

| Betrachtete Funktion: Funktionsname | | | | | | | | |
|---|---|---|---|---|---|---|---|---|
| Eingehende Information | | Aktion | Aktion SIL > 0 | Informieren / Warnen des TF / anderer Verkehrsteilnehmer | Info SIL > 0 | Verarbeitet zu Information für andere Funktion Ausgehende Information | | |
| | | | | | | Inhalt | Zielfunktionen / System | SIL > 0 |
| SIL > 0 | Inhalt | | | | | | | |
| Information von Funktion: Funktionsname | | | | | | | | |
| X | Inhalt von Information I | Auswirkung I | - | Inhalt der Information / Warnung I | X | Inhalt von Information I | Name I | - |
| | | Auswirkung II | X | Inhalt der Information / Warnung II | - | Inhalt von Information II | Name II | - |
| | | | | | | | Name III | X |
| - | Inhalt von Information II | Auswirkung I | - | Inhalt der Information / Warnung I | - | Inhalt von Information I | Name I | - |

Die nachfolgende Tabelle lässt den Schritt der Übertragung der Sicherheitsrelevanzdaten der eingehenden Informationen einer nachfolgenden Funktion Y auf die entsprechende ausgehende Information der vorhergehenden Funktionseinheit X erkennen, die die ausgehende Information als eingehende Information bereitstellt.

| Betrachtete Funktion X | | | | | |
|---|---|---|---|---|---|
| Eingehende Info | | Aktion SIL > 0 | Info / Warnung SIL >0 | Ausgehende Info | |
| SIL > 0 | Inhalt | | | Inhalt | SIL > 0 |
| Ursprungsfunktion Z | | | | | |
| X | ... | X | - | ... | - |
| X | ... | - | X | ... | - |
| X | ... | - | - | Neu 1 | X |
| X | ... | - | - | Neu 2 | X |
| - | ... | - | - | ... | - |

| Betrachtete Funktion Y | | | | | |
|---|---|---|---|---|---|
| Eingehende Info | | Aktion SIL > 0 | Info / Warnung SIL >0 | Ausgehende Info | |
| SIL > 0 | Inhalt | | | Inhalt | SIL > 0 |
| Ursprungsfunktion X | | | | | |
| X | Neu 1 | X | - | - | |
| X | Neu 2 | - | X | - | |
| - | - | | | | |
| - | - | | | | |
| - | - | | | | |

Nachdem bei dem Verfahren also die Funktionen lediglich hinsichtlich der eingehenden Informationen betrachtet wurden, werden die Sicherheitsrelevanzdaten durch die rekursive Übertragung der Sicherheitsrelevanzdaten für die eingehende Information auf die entsprechenden ausgehenden Informationen der vorhergehenden Funktionseinheiten ergänzt, ohne dass eine gesonderte Bewertung oder Untersuchung erforderlich ist. Dies hat den Vorteil, dass keine Inkonsistenzen bei der Bewertung auftreten können und das Verfahren zuverlässig automatisiert ausführbar ist.

Wenn in einer betrachteten Funktion X, Y eine der ausgehenden Informationen oder Aktionen sicherheitsrelevant ist, so trifft dies auch für die Funktion selbst zu, die als sicherheitsrelevant SIL > 0, gekennzeichnet wird. Ist hingegen weder eine Aktion noch eine ausgehende Information sicherheitsrelevant, so ist auch die betrachtete Funktion nicht sicherheitsrelevant (SIL = 0).

Auf der Basis der für eine Funktionseinheit gespeicherten Sicherheitsrelevanzdaten lässt sich damit eine Aussage für die Sicherheitsrelevanz der Funktionseinheit selbst gewinnen.

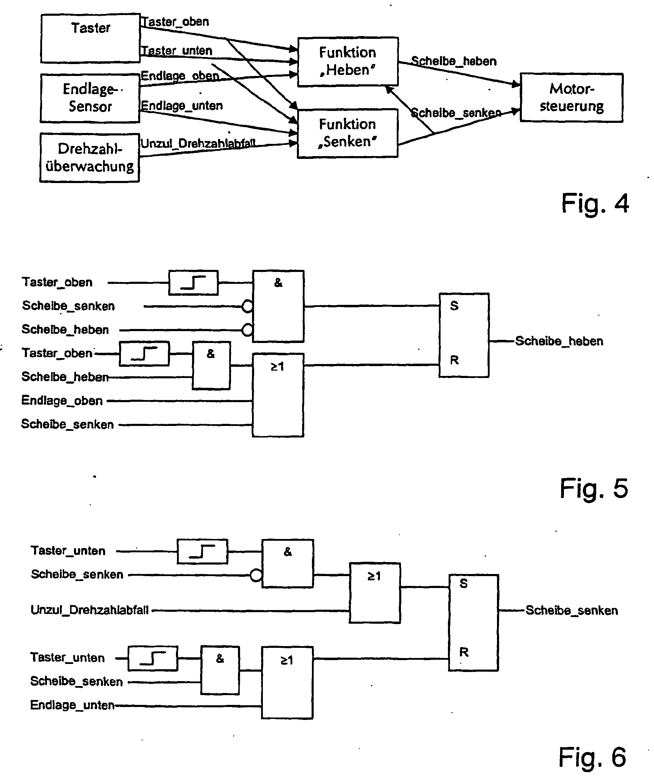

Das Verfahren zur Untersuchung der Sicherheit einer technischen Einrichtung soll nachfolgend anhand einer Steuereinheit für einen elektrischen Fensterheber mit Einklemmschutz beschrieben werden. Die Figur 4 lässt ein Blockdiagramm einer solchen Steuereinheit erkennen. Die Steuereinheit hat folgende Systemkomponenten:
a) Funktionen:
   a1) Funktion "Heben"
   a2) Funktion "Senken"
b) Eingänge (Sensoren):
   b1) Taster
   b2) Endlage-Sensoren
   b3) Drehzahlsensor und Auswerteeinheit (Drehzahlüberwachung)
c) Ausgänge:
   c1) Fenster-Motorsteuerung.

Die Steuereinheit für den elektrischen Fensterheber mit Einklemmschutz ist Bestandteil eines Kraftfahrzeuges. Der Fensterheber besteht aus:
- einem Taster, der die Positionen "oben", "Mittellage" und "unten" einnehmen kann;
- einem Sensor, der die Endlage der Scheibe erkennt, d. h. "oben" (vollständig geschlossen) bzw. "unten" (vollständig geöffnet);
- einem Sensor, der die Drehzahl des Fensterhebermotors misst und seine Auswerteeinheit, die einen unzulässig hohen Abfall der Drehzahl erkennt;
- einer Fenstermotorsteuerung, die die Signale von der Steuereinheit zum Heben und Senken der Scheibe auswertet und dafür sorgt, dass bei widersprüchlichen Signalen ("Scheibe heben" und "Scheibe senken" liegen gleichzeitig an), zur sicheren Seite hin reagiert wird, d. h. die Scheibe gesenkt wird.

Die Figur 5 lässt ein Logikdiagramm für die Funktion "Heben" erkennen. Wenn der Taster nach oben gezogen wird (Taster_oben), so soll die Fensterscheibe so lange nach oben bewegt werden bis:
- der Taster wieder nach oben gezogen wird,
- der Taster nach unten gedrückt wird,
- die Scheibe der Endlage "oben" erreicht hat, oder
- der Einklemmschutz anspringt.

Die eingehenden Informationen für die Funktion "Heben" sind
- Taster_oben
- Scheibe_heben
- Endlage_oben
- Scheibe_senken.

Bei der Aktion "Scheibe heben" könnte die Funktion "Heben" ausfallen, so dass das Fenster nicht geschlossen werden kann. Dies führt zwar zu einem Verlust des Komforts, nicht jedoch zu einer Gefährdung von Personen. Wird die Scheibe zur Unzeit gehoben, so können Personen leicht bis schwer verletzt werden. Die Personen sind während der gesamten Benutzung der Gefährdung ausgesetzt, da die Verwendung des Fensterhebers im Allgemeinen zur Benutzung eines Fahrzeugs gehört. Die Gefahr kann unter bestimmten Bedingungen, z. B. durch Ausschalten der Zündung oder Betätigung des Tasters abgewendet werden. Nach den "Guidelines for the safety analysis of vehicle based programmable system, Status draft for public comment" 2005 von MISRA ergibt sich eine Wahrscheinlichkeit von 10⁻⁷ bis 10⁻⁶, dass eine Person verletzt wird. Hieraus ergibt sich wiederum die Zuordnung von SIL 2.

Fehlt die Information Taster_oben kann es nicht zu einer Gefährdung kommen, da das Fenster dann nicht geschlossen werden kann bzw. das Fenster nicht manuell gestoppt werden kann. Liegt die Information zur Unzeit an, wird das Fenster gehoben, solange kein Widerstand auf die Scheibe wirkt.

Fehlt die Information "Scheibe_senken" kann das Schließen des Fensters nicht automatisch gestoppt werden, woraus sich eine Gefährdung von Personen ergibt. Kommt das Signal zur Unzeit, so wird das Schließen des Fensters automatisch gestoppt bzw. das Fenster kann nicht geöffnet werden.

Fehlt das Signal "Scheibe_heben", so kann das Schließen des Fensters manuell gestoppt werden. Kommt das Signal zur Unzeit, kann das Fenster nicht geschlossen werden. Daraus kann keine Gefährdung von Personen entstehen.

Fehlt das Signal "Endlage_oben", stoppt das Schließen nicht bei geschlossenem Fenster, wodurch der Motor beschädigt werden kann. Liegt das Signal zur Unzeit an, schließt das Fenster nicht vollständig.

Die Funktion "Heben" gibt keine Warnungen aus und stellt auch keine Informationen für andere Funktionen bereit.

Bei der Funktion "Senken" soll, wenn der Taster nach unten gedrückt wird, die Fensterscheibe solange nach unten bewegt werden, bis:
- der Taster wieder nach unten gedrückt wird,
- der Taster nach oben gezogen wird,
- die Scheibe die Endlage "unten" erreicht hat.

Eingehende Informationen sind:
- Taster_unten
- Scheibe_senken
- Endlage_unten
- Taster_oben
- Unzul_Drehzahlabfall.

Fällt bei der Aktion "Scheibe_senken" die Funktion "Senken" aus, so kann das Fenster nicht geöffnet werden. Dies führt zwar zu einem Verlust des Komforts, nicht jedoch zu einer Gefährdung von Personen.

Durch ein Senken der Scheibe zur Unzeit können keine Personen verletzt werden. Hieraus ergibt sich keine Sicherheitsanforderungsstufe.

Warnungen werden von der Funktion nicht abgegeben.

Die Funktion "Senken" stellt Informationen für andere Funktionen bereit, nämlich die Information "Scheibe_senken" für die Funktion "Heben".

Die Figur 6 lässt ein Logikdiagramm für die Funktion "Senken" erkennen, die die eingehenden Informationen zum Senken der Fensterscheibe und Stoppen des Absenkvorgangs nach den oben genannten Bedingungen unterstützt.

Zur Überprüfung der Sicherheit des elektrischen Fensterhebersystems werden nun die Funktionen "Heben" und "Senken" analysiert.

Für die Funktion "Heben" werden zunächst die in der nachfolgenden Tabelle aufgeführten Informationen abgespeichert.

| Betrachtete Funktion: Heben | | | | | | | | |
|---|---|---|---|---|---|---|---|---|
| Eingehende Information | | Aktion | Aktion SIL | Informieren / Warnen des Fahrers / anderer V-Teilnehmer | Info SIL | Verarbeitet zu Information für andere Funktion Ausgehende Information | | |
| SIL | Inhalt | | | | | Inhalt | Zielfunktion / - system | SIL |
| Information von Funktion: Senken | | | | | | | | |
| | Scheibe_senken | Scheibe heben | 2 | - | - | | | |

| Information von Sensoren | | | | | | | | |
|---|---|---|---|---|---|---|---|---|
| | Taster_oben | Scheibe heben | - | - | | | | |
| | Endlalage_oben | Scheibe heben | - | - | | | | |

Den Informationen "Taster_oben" und Endlage_oben" von den Sensoren wird kein Sicherheitsintegritätslevel SIL zugewiesen, da sie für die Aktion nicht sicherheitsrelevant sind. Beim Ausfall der Information "Scheibe_senken", kann jedoch die Aktion "Heben" nicht automatisch bei Gefahr gestoppt werden, daher wird der Aktion der Sicherheitsintegritätslevel SIL = 2 zugewiesen.

Für die Funktion "Senken" werden folgende Daten abgespeichert.

| Betrachtete Funktion: Senken | | | | | | | | |
|---|---|---|---|---|---|---|---|---|
| Eingehende Information | | Aktion | Aktion SIL | Informieren / Warnen des Fahrers / anderer V-Teilnehmer | Info SIL | Verarbeitet zu Information für andere Funktion Ausgehende Information | | |
| SIL | Inhalt | | | | | Inhalt | Zielfunktion / - system | SIL |
| Information von Sensoren | | | | | | | | |
| | Taster_unten | Scheibe senken | - | - | - | Scheibe_senken | Heben | |
| | Endlage_ unten | Scheibe senken | - | - | - | Scheibe_senken | Heben | |
| | Unzul_Drehzahlabfall | Scheibe senken | - | - | - | Scheibe_senken | Heben | |

Da die Aktionen und Informationen der Funktion "Senken" sicherheitsunkritisch sind, werden sie als solche gekennzeichnet. Den eingehenden Informationen kann nun in der Funktion "Heben" ein Sicherheitsintegritätslevel SIL zugewiesen werden, da alle dafür benötigten Ausgänge und deren Sicherheitsintegritätslevel bekannt sind.

| Betrachtete Funktion: Heben | | | | | | | | |
|---|---|---|---|---|---|---|---|---|
| Eingehende Information | | Aktion | Aktion SIL | Informieren / Warnen des Fahrers / anderer V-Teilnehmer | Info SIL | Verarbeitet zu Information für andere Funktion Ausgehende Information | | |
| SIL | Inhalt | | | | | Inhalt | Zielfunktion / - system | SIL |
| Information von Funktion: Senken | | | | | | | | |
| 2 | Scheibe_senken | Scheibe heben | 2 | - | - | | | |

| Information von Sensoren | | | | | | | | |
|---|---|---|---|---|---|---|---|---|
| - | Taster_oben | Scheibe heben | - | - | | | | |
| - | Endlalage_oben | Scheibe heben | - | - | | | | |

Da nun auch die Sicherheitsanforderung an die Information "Scheibe_senken" bekannt ist, können den eingehenden Informationen der Funktion "Senken" nun auch ein Sicherheitsintegritätslevel SIL zugewiesen werden:

| Betrachtete Funktion: Senken | | | | | | | | |
|---|---|---|---|---|---|---|---|---|
| Eingehende Information | | Aktion | Aktion SIL | Informieren / Warnen des Fahrers / anderer V-Teilnehmer | Info SIL | Verarbeitet zu Information für andere Funktion Ausgehende Information | | |
| SIL | Inhalt | | | | | Inhalt | Zielfunktion / - system | SIL |
| Information von Sensoren | | | | | | | | |
| 2 | Taster_unten | Scheibe senken | - | - | - | Scheibe_senken | Heben | 2 |
| 2 | Endlalage_unten | Scheibe senken | - | - | - | Scheibe_senken | Heben | 2 |
| 2 | Unzul_Drehzahlabfall | Scheibe senken | - | - | - | Scheibe_senken | Heben | 2 |

Da die Sicherheitsrelevanz der ausgehenden Information die Sicherheitsrelevanz der eingehenden Informationen maßgeblich beeinflusst hat, ist nun zu prüfen, welchen Einfluss die eingehenden Informationen auf die resultierende Aktion haben. Wie bei der Betrachtung "Heben" bereits festgestellt wurde, kann nur ein fehlendes Signal "Scheibe senken" zur Gefährdung von Personen führen. Maßgeblich für die Sicherheit von Personen ist der Einklemmschutz und damit die Information, ob ein unzulässig hoher Drehzahlabfall vorliegt. Der sich aus der Bedeutung der Information "Scheibe_senken" ergebende Sicherheitsintegritätslevel SIL ist also nur auf die Information "Unzul_Drehzahlabfall" zu übertragen. Die anderen Informationen besitzen daher keine Sicherheitsrelevanz:

| Betrachtete Funktion: Senken | | | | | | | | |
|---|---|---|---|---|---|---|---|---|
| Eingehende Information | | Aktion | Aktion SIL | Informieren / Warnen des Fahrers / anderer V-Teilnehmer | Info SIL | Verarbeitet zu Information für andere Funktion Ausgehende Information | | |
| SIL | Inhalt | | | | | Inhalt | Zielfunktion / - system | SIL |
| Information von Sensoren | | | | | | | | |
| 2 | Taster_unten | Scheibe senken | - | - | - | Scheibe_senken | Heben | 2 |
| 2 | Endlalage_unten | Scheibe senken | - | - | - | Scheibe_senken | Heben | 2 |
| 2 | Unzul_Drezahlabfall | Scheibe senken | - | - | - | Scheibe_senken | Heben | 2 |

Der Funktion "Heben" wird aufgrund der Sicherheitsrelevanz der Aktion "Scheibe heben" der Sicherheitsintegritätslevel SIL = 2 zugewiesen. Der Funktion "Senken" wird aufgrund der Sicherheitsrelevanz der ausgehenden Information "Scheibe_senken" der Sicherheitsintegritätslevel SIL = 2 zugewiesen. Damit wird auch der Steuereinheit für den elektrischen Fensterheber mit Einklemmschutz selbst als Funktionseinheit ein Sicherheitsintegritätslevel von SIL = 2 zugewiesen.

## Patentansprüche

1. Verfahren zur Untersuchung der Sicherheit einer technischen Einrichtung mit einer Vielzahl von Funktionseinheiten, die miteinander durch Übertragung von Informationen vernetzt sind und eingehende Informationen mit mindestens einer für die Funktionseinheit spezifischen Funktion verarbeiten, **gekennzeichnet durch**
a) Überprüfen der Sicherheitsrelevanz der eingehenden Informationen und Abspeichern von Sicherheitsrelevanzdaten für jede eingehende Information in Bezug auf die diese eingehende Information erhaltende Funktionseinheit; und
ausgehend von jeweils einer Funktionseinheit, die eine Information nicht weiterverarbeitet, um sie einer anderen Funktionseinheit als eingehende Information bereitzustellen,
b) Zuordnen der Sicherheitsrelevanzdaten der eingehenden Informationen auf die entsprechende ausgehende Information einer vorhergehenden Funktionseinheit, die die ausgehende Information der nachfolgenden Funktionseinheit als eingehende Information bereitstellt, und
c) Untersuchung der technischen Einrichtung hinsichtlich der Sicherheit in Abhängigkeit von den abgespeicherten Sicherheitsrelevanzdaten,
wobei .das Verfahren automatisch in Abhängigkeit von einem abgespeicherten Systemmodell der technischen Einrichtung in einem Computer ausgeführt wird.

2. Verfahren nach Anspruch 1, **dadurch gekennzeichnet, dass** für die Funktionseinheiten
a) eine Überprüfung erfolgt, ob mit den eingehenden Informationen Aktionen durch die spezifische Funktion ausgelöst werden und ob Auswirkungen solcher Aktionen sicherheitskritisch sind, und Speichern der Sicherheitsrelevanz der Auswirkungen von Aktionen in Bezug auf die eingehenden Informationen;
b) eine Überprüfung erfolgt, ob eingehende Informationen durch die Funktionseinheit zur Ausgabe von Warnungen genutzt werden, und Speichern der Sicherheitsrelevanz der eingehenden Informationen in Bezug auf die Funktionseinheit, wobei zur Ausgabe von Warnungen genutzte Informationen als sicherheitsrelevant eingestuft werden;
c) eine Überprüfung erfolgt, welche eingehenden Informationen mit anderen eingehenden Informationen durch die spezifische Funktion zu einer neuen Information verarbeitet werden, und Speichern der Sicherheitsrelevanz der eingehenden Information in Bezug auf die ausgehende Information und / oder der Identität der mindestens einen Funktionseinheit, die die neue Information als eingehende Information erhält;
und für die technische Einrichtung ausgehend von jeweils einer Funktionseinheit, die eine Information nicht weiterverarbeitet, um sie einer anderen Funktionseinheit als eingehende Information bereitzustellen;
d) Zuordnen von gespeicherten Sicherheitsrelevanzdaten der eingehenden Informationen zu den entsprechenden neuen Informationen der Funktionseinheiten, die die neue Information der nachfolgenden Informationseinheit als eingehende Information bereitstellt.

3. Verfahren nach einem der vorhergehenden Ansprüche, **gekennzeichnet durch** Zuordnen von Sicherheitsrelevanzdaten ausgehender Informationen und / oder Aktionen von Funktionseinheiten zu den spezifischen Funktionen derart, dass eine spezifische Funktion ebenfalls als sicherheitsrelevant eingestuft wird, wenn eine von der spezifischen Funktion generierte ausgehende Information oder Aktion sicherheitsrelevant ist.

4. Verfahren nach einem der vorhergehenden Ansprüche, **dadurch gekennzeichnet, dass** die Sicherheitsrelevanzdaten definierte Sicherheitsintegritätslevel (Safety Integrity Level - SIL) oder Sicherheitsanforderungsklassen (AK) sind.

5. Einrichtung zur Untersuchung der Sicherheit einer technischen Einrichtung, die eine Vielzahl von miteinander durch Übertragung von Informationen vernetzten Funktionseinheiten zur Verarbeitung von eingehenden Informationen mit mindestens einer für die Funktionseinheit spezifischen Funktion hat, mit einer Bewertungseinheit und Datenspeicher, **dadurch gekennzeichnet, dass** die Bewertungseinheit zur Durchführung des Verfahrens nach einem der vorhergehenden Ansprüche mit den Schritten:
a) Überprüfen der Sicherheitsrelevanz der eingehenden Informationen und Abspeichern von Sicherheitsrelevanzdaten für jede eingehende Information in Bezug auf die diese eingehende Information erhaltende Funktionseinheit; und
ausgehend von jeweils einer Funktionseinheit, die eine Information nicht weiterverarbeitet, um sie einer anderen Funktionseinheit als eingehende Information bereitzustellen,
b) Zuordnen der Sicherheitsrelevanzdaten der eingehenden Informationen auf die entsprechende ausgehende Information einer vorhergehenden Funktionseinheit, die die ausgehende Information der nachfolgenden Funktionseinheit als eingehende Information bereitstellt, und
c) Untersuchung der technischen Einrichtung hinsichtlich der Sicherheit in Abhängigkeit von den abgespeicherten Sicherheitsrelevanzdaten, eingerichtet ist.

## Claims

1. Method for analysing the safety of a technical device having a multiplicity of functional units which are networked to one another by transmitting information and process incoming information using at least one function specific to the functional unit, **characterized by**
a) checking the safety relevance of the incoming information and storing safety relevance data for each incoming item of information with respect to the functional unit receiving this incoming information; and,
starting from a respective functional unit which does not process an item of information further in order to provide another functional unit with said information as incoming information,
b) assigning the safety relevance data relating to the incoming information to the corresponding outgoing information from a preceding functional unit which provides the subsequent functional unit with the outgoing information as incoming information, and
c) analysing the safety of the technical device on the basis of the stored safety relevance data, whereby the method is automatically carried out in a computer on the basis of a stored system model of the technical device.

2. Method according to Claim 1, **characterized in that**, for the functional units,
a) a check is carried out in order to determine whether actions are triggered by the specific function with the incoming information and whether effects of such actions are critical to safety, and the safety relevance of the effects of actions with respect to the incoming information is stored;
b) a check is carried out in order to determine whether incoming information is used by the functional unit to output warnings, and the safety relevance of the incoming information with respect to the functional unit is stored, information used to output warnings being classified as being relevant to safety;
c) a check is carried out in order to determine which incoming information is processed with other incoming information by the specific function to form a new item of information, and the safety relevance of the incoming information with respect to the outgoing information and/or the identity of the at least one functional unit which receives the new information as incoming information is/are stored;
and, for the technical device, starting from a respective functional unit which does not process an item of information further in order to provide another functional unit with said information as incoming information,
d) stored safety relevance data relating to the incoming information are assigned to the corresponding new information from the functional units which provide the subsequent functional unit with the new information as incoming information.

3. Method according to one of the preceding claims, **characterized by** assigning safety relevance data relating to outgoing information and/or actions of functional units to the specific functions in such a manner that a specific function is likewise classified as being relevant to safety if an item of outgoing information or an action generated by the specific function is relevant to safety.

4. Method according to one of the preceding claims, **characterized in that** the safety relevance data are defined safety integrity levels (SIL) or safety requirement classes (AK).

5. Device for analysing the safety of a technical device having a multiplicity of functional units which are networked to one another by transmitting information and are intended to process incoming information using at least one function which is specific to the functional unit, having an assessment unit and a data memory, **characterized in that** the assessment unit is set up to carry out the method according to one of the preceding claims, having the steps of:
a) checking the safety relevance of the incoming information and storing safety relevance data for each item of incoming information with respect to the functional unit receiving this incoming information; and,
starting from a respective functional unit which does not process an item of information further in order to provide another functional unit with said information as incoming information,
b) assigning the safety relevance data relating to the incoming information to the corresponding outgoing information from a preceding functional unit which provides the subsequent functional unit with the outgoing information as incoming information, and
c) analysing the safety of the technical device on the basis of the stored safety relevance data.

## Revendications

1. Procédé pour vérifier la sécurité d'un dispositif technique comportant une pluralité d'unités fonctionnelles, qui sont mutuellement mises en réseau par transmission d'informations et qui traitent des informations entrantes à l'aide d'au moins une fonction spécifique de l'unité fonctionnelle, **caractérisé par**
a) la vérification de la pertinence du point de vue de la sécurité des informations entrantes et le stockage de données de pertinence du point de vue de la sécurité pour chaque information entrante par rapport à l'unité fonctionnelle obtenant cette information entrante ; et à partir d'une unité fonctionnelle respective qui ne transforme pas d'information afin de fournir cette dernière à une autre unité fonctionnelle en tant qu'information entrante,
b) l'affectation des données de pertinence du point de vue de la sécurité des informations entrantes à l'information sortante correspondante d'une unité fonctionnelle précédente, qui fournit l'information sortante de l'unité fonctionnelle suivante en tant qu'information entrante, et
c) l'examen du dispositif technique du point de vue de la sécurité en fonction des données de pertinence du point de vue de la sécurité stockées,
le procédé est mis en oeuvre automatiquement en fonction d'un modèle de système stocké du dispositif technique dans un ordinateur.

2. Procédé selon la revendication 1, **caractérisé en ce que**, pour les unités fonctionnelles
a) il est vérifié si des actions associées aux informations entrantes sont déclenchées par la fonction spécifique et si les effets de ces actions sont critiques du point de vue de la sécurité, et la pertinence du point de vue de la sécurité des effets d'actions par rapport aux informations entrantes est mémorisée ;
b) il est vérifié si des informations entrantes sont utilisées par l'unité fonctionnelle pour émettre des alarmes, et la pertinence du point de vue de la sécurité des informations entrantes par rapport à l'unité fonctionnelle est mémorisée, dans lequel les informations utilisées pour l'émission d'alarmes sont classées comme pertinentes du point de vue de la sécurité ;
c) il est vérifié quelles informations entrantes sont transformées en association avec d'autres informations entrantes par la fonction spécifique en une nouvelle information, et la pertinence du point de vue de la sécurité de l'information entrante par rapport à l'information sortante et/ou l'identité de l'au moins une unité fonctionnelle qui obtient la nouvelle information en tant qu'information entrante sont/est mémorisée(s) ;
et pour le dispositif technique, à partir d'une unité fonctionnelle respective qui ne transforme pas d'information, afin de fournir cette dernière à une autre unité fonctionnelle en tant qu'information entrante ;
d) l'affectation de données de pertinence du point de vue de la sécurité des informations entrantes aux nouvelles informations correspondantes des unités fonctionnelles, qui fournissent la nouvelle information de l'unité fonctionnelle suivante en tant qu'information entrante.

3. Procédé selon l'une quelconque des revendications précédentes, **caractérisé par** l'affectation de données de pertinence du point de vue de la sécurité d'informations sortantes et/ou d'actions d'unités fonctionnelles à des fonctions spécifiques, de telle manière qu'une fonction spécifique soit également classée comme pertinente du point de vue de la sécurité lorsqu'une information sortante ou une action générée par la fonction spécifique est pertinente du point de vue de la sécurité.

4. Procédé selon l'une quelconque des revendications précédentes, **caractérisé en ce que** les données de pertinence du point de vue de la sécurité sont un niveau défini d'intégrité de sécurité (Safety Integrity Level - SIL) ou des classes définies d'exigences du point de vue de la sécurité (AK).

5. Dispositif destiné à tester la sécurité d'un dispositif technique qui comporte une pluralité d'unités fonctionnelles connectées en réseau par transmission d'informations pour le traitement d'informations entrantes par au moins une fonction spécifique de l'unité fonctionnelle, comportant une unité d'évaluation et une mémoire de données, **caractérisé en ce que** l'unité d'évaluation est conçue pour mettre en oeuvre le procédé selon l'une quelconque des revendications précédentes, par les étapes consistant à :
a) vérifier la pertinence du point de vue de la sécurité des informations entrantes et stocker des données de pertinence du point de vue de la sécurité pour chaque information entrante par rapport à l'unité fonctionnelle obtenant cette information entrante ; et à partir d'une unité fonctionnelle respective qui ne transforme pas d'information, afin de fournir cette dernière à une autre unité fonctionnelle en tant qu'information entrante,
b) affecter les données de pertinence du point de vue de la sécurité des informations entrantes à l'information sortante correspondante d'une unité fonctionnelle précédente, qui fournit l'information sortante de l'unité fonctionnelle suivante en tant qu'information entrante, et
c) examiner le dispositif technique du point de vue de la sécurité en fonction des données de pertinence du point de vue de la sécurité stockées.
